# EUROPEAN PATENT SPECIFICATION

(11) **EP 1 769 591 B1**
(45) Date of publication and mention of the grant of the patent: **13.04.2016**
(21) Application number: 05780687.9
(22) Date of filing: 14.07.2005
(51) Int. Cl.: H04W 76/00, H04L 29/06, H04W 4/10

(54) **METHOD AND APPARATUS FOR PROCESSING A CALL IN A PUSH-TO-TALK, PTT, OVER CELLULAR (POC) SYSTEM**
VERFAHREN UND VORRICHTUNG ZUR VERARBEITUNG EINES ANRUFS IN EINEM ZELLULAREN PUSH-TO-TALK (PTT) SYSTEM (POC)
PROCEDE ET APPAREIL DE TRAITEMENT D'APPEL DANS UN SYSTEME DE MESSAGERIE VOCALE INSTANTANEE CELLULAIRE ("PUSH-TO-TALK OVER CELLULAR" OU POC)

(30) Priority: 16.07.2004 KR 2004055779
(43) Date of publication of application: 04.04.2007
(73) Proprietor: Samsung Electronics Co., Ltd., Suwon-si, Gyeonggi-do, 443-742 (KR)
(72) Inventor: PARK, Sung-Jin, 839-1403, Byckjeokgol 8 danji Apt., Suwon-si, Gyeonggi-do 443-725 (KR); JUNG, Ki-Ho, Kwacheon-si, Gyeonggi-do 427-732 (KR); SUNG, Sang-Kyung, 107-1205, Bangbae Woosung Apt., Seoul 137-753 (KR)
(74) Representative: Grünecker Patent- und Rechtsanwälte PartG mbB
(86) International application number: PCT/KR2005/002268
(87) International publication number: WO 2006/009367

(56) References cited:
- EP-A1- 1 757 064
- WO-A1-2005/018200
- US-A1- 2002 039 895
- US-A1- 2002 077 136
- US-A1- 2003 008 657
- US-A1- 2003 153 343
- OMA POC WG CONTACT(S): ANDREW ALLEN ET AL: "Reply LS to 3GPP on principles for overlapping issues with Public OMA Confidential OMA regarding PoC", 3GPP DRAFT; SP-040016, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Phoenix, USA; 20040303, 3 March 2004 (2004-03-03), XP050201404, [retrieved on 2004-03-03]
- ROSENBERG J ET AL: "SIP: Session Initiation Protocol", 20020601; 20020600, 1 June 2002 (2002-06-01), pages 1-269, XP015009039,

## Description

### Technical Field

The present invention relates to a method and apparatus for processing a call in a push to talk (PTT) system , and more particularly, to a method and apparatus for processing a call to establish a call connection with a PTT service terminal engaged in a pre-established session.

### Background Art

A push to talk (PTT) system provides a PTT service that is an instant service, akin to a walkie-talkie service, to a PTT service subscriber using a PTT terminal. The PTT service is literally a service by which the PTT service subscriber is able to immediately talk to another subscriber by pushing a talk button, i.e. an input means ('switch'), that enables the PTT terminal to perform the PTT service. The PTT service is capable of providing a relatively fast communication service. Further, a group service in the PTT service allows PTT service subscribers in the group to listen to a talk of one PTT service subscriber using their PTT terminals, overcoming a limitation of 1-to-1 communication by typical telephones. The PTT service subscriber can select one of an instant personal talk service provided to one PTT service subscriber, adhoc group talk and instant group talk services provided to specific multiple PTT service subscribers, and a chat service provided to unspecific multiple PTT service subscribers.

When the PTT subscriber pushes a switch on the PTT terminal to talk, the PTT terminal transmits a PTT service request to a network. The network either refuses to accept the request from the PTT terminal or assigns resources for supporting the service, based on predetermined criteria such as resource availability, a requesting user's priority, and the like. When a session is established to provide the requested service from the PTT terminal, the PTT subscriber requesting the PTT service is then able to talk, and other PTT subscribers are then able to listen through the session. When the PTT subscriber releases the PTT connection, the PTT terminal transmits a release message to the network, and the network receiving the message releases the resources. Thus, resources are utilized only for an actual voice transaction or voice item.

Since the PTT system is able to provide a fast communication service to PTT subscribers as described above, it is necessary to have a short call setup time. It is required to provide the PTT service to the PTT subscriber within a short time after the call, i.e. a voice item, is initiated. That is, session establishment for the PTT call connection should be completed within a short time.

In the PTT system, a pre-established session is used to reduce a time to establish a session upon the call connection. The pre-established session is established between a PTT server and a PTT terminal to store in advance information required for session establishment. That is, the pre-established session process includes a mechanism in which negotiation proceeds to obtain media parameters, such as Internet protocol (IP) addresses, ports and a CODEC used to communicate media and a talk burst control message between the PTT terminal and the home PTT server. A system with the pre-established session is allowed to directly establish the session without performing exchange negotiation when the session for PTT call information should be established, which reduces a time from a session establishment request to session completion.

Upon receipt of a message requesting to establish a session from any PTT terminal, the PTT system sends a message to accept the request without exchanging a message with a correspondent terminal when the PTT terminal to receive the message has the pre-established session. In a manual answer mode, when a PTT over cellular (PoC) client B 100-B receives a PoC call, it is asked to a PoC user whether to accept the PoC call.

A session establishment process in a manual answer mode on a system with a pre-established session will be described with reference to the accompanying drawings.

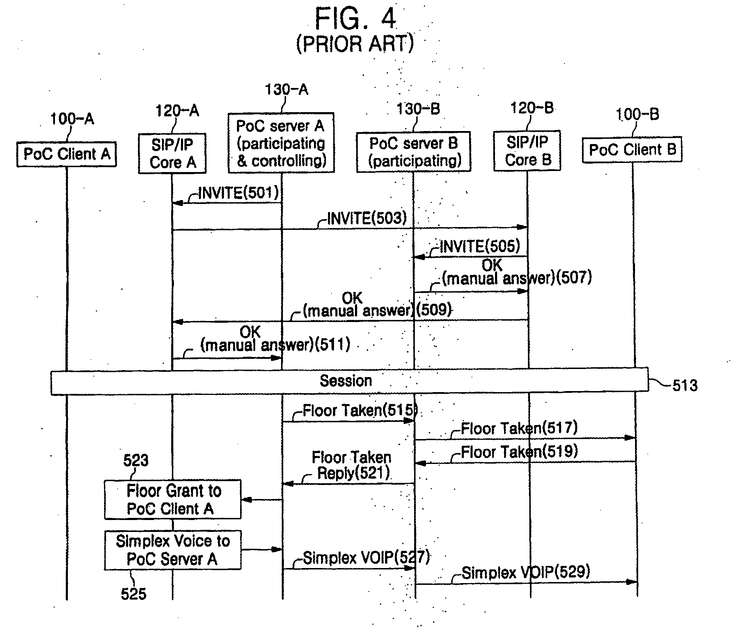

FIG. 4 shows a conventional session establishment process in a manual answer mode on a PoC system with a pre-established session.

In FIG. 4, when a PoC client B 100-B receives an INVITE message 501, 503, 505 requesting to establish a session for a PoC call requested by a PoC client A 100-A, the PoC client B 100-B automatically transmits an OK message 507, 509, 511 to a PoC server A 130-A in a manual answer mode. Accordingly, a PoC session 513 is initiated between the PoC client A 100-A and the PoC client B 100-B and a media connection is created irrespective of the intention of the PoC client B 100-B. In the session, the PoC server A 130-A notifies the PoC client B 100-B that the PoC client A 100-A has a floor, using floor taken messages 515 and 517.

After the session is established, the PoC client B 100-B transmits a floor taken reply message 519, including an indication whether to accept the PoC call, to the PoC server B 130-B. When the PoC client B 100-B accepts the PoC call, floor determination is made based on a floor taken reply message 521. When the PoC client B 100-B does not accept the PoC call, the PoC server B 130-B has to notify the PoC server A 130-A that the PoC client B 100-B does not accept the call using the floor taken relay message 521, and release the media connection, previously established through the INVITE message, using a BYE message from the PoC client B 100-B.

In the foregoing process, when the PoC system with the pre-established session sets a manual answer mode, there is no problem only if the PoC client B 100-B receiving a PoC call connection request accepts the PoC call.

The PoC client A acquires the floor through processes 523. The PoC client A then forwards voice to the PoC server A 525. The voice from the PoC server A is delivered to the PoC server B 527 and then to the PoC client B 529. At the processes 525 to 529, the voice may be delivered through a simple voice over Internet protocol (VoIP).

However, when the PoC client B 100-B does not accept the PoC call, radio resources are wasted because floor status information is delivered to the PoC client B 100-B after the media connection is established, and then it is determined whether to accept or deny the PoC call by the PoC client B 100-B has. Further, there is a need for another process to release the established media connection.

In a manual answer mode on a conventional PoC system with a pre-established session, when a session between two PoC clients is established, the PoC client receiving a PoC call request is forced to determine if the PoC call is accepted. Even when the PoC client does not accept the PoC call, the processes of establishing a media connection, receiving floor status information, releasing the established media connection, and the like are performed. Accordingly, unnecessary resources and time are wasted.

The publication titled "Reply LS to 3GPP on principles for overlapping issues with OMA regarding PoC" of the Technical Specification Group Service and System Aspects Meeting #23, dated March 15 to 19, 2004, TSGS#23(04)0016, dated February 4, 2004 is a TSG SA document and refers to the performance of the underlying network responsible to deliver PoC services. Push to talk over cellular, PoC, service is a two way form of communications that allows users to engage an immediate communication with one or more users. PoC service is similar to a "walkie-talkie" application where a user presses a button to talk with an individual user or broadcast to a group of participants. The receiving participants hear the sender's voice either without any action on their part, for example, without having to answer the call or may be notified and has to accept the call before he can hear the senders voice. Other participants can respond to this message once this initial speech is complete. The communication is half duplex, such that at most one person can talk at a time and all other participants hear the speech. This contrasts with voice calls, which are full duplex, where more than one person can talk at a time. The PoC service enabler may support a 1-to-1 communication feature, a 1-to-many communication feature and a personal alert feature. The 1-to-1 communication feature is the basic capability for setting up voice communication between two users. The voice communication attempt may either be accepted automatically or manually answered by the invited subscriber. The 1-to-many communication feature enables a subscriber to set-up a voice communication with a multiple number of other subscribers, where the participants speak one at a time. The personal alert feature enables a subscriber to alert another subscriber. The alert expresses the calling subscriber's wish to communicate and to request the invited subscriber to call back.

WO 2006/000853 A1 refers to a session set-up for time-critical services. A session set-up for communicating data via a data network is disclosed. First, a session establishment between a communication apparatus and a serving entity is requested for a service from the serving entity supporting the service. Then, when a requirement of a user connection for the service is determined, an association with a data network for the service is activated via a core network.

The publication titled "SIP: Session Initiation Protocol" is a document from the Network Working Group dated June 1, 2002, 20020601, 20020600 and specifies an Internet standard track protocol for the Internet community and provides requests and discussions for improvements. In particular, this document describes Session Initiation Protocol (SIP), an application-layer control (signaling) protocol for creating, modifying, and terminating sessions with one or more participant. These sessions include Internet telephone calls, multimedia distribution, and multimedia conferences. SIP invitations used to create session carry session descriptions that allow participants to agree on a set of compatible media types. SIP makes use of elements called proxy servers to help route requests to the user's current location, authenticate and authorize users for services, implement provider call-routing policies, and provide features to users. SIP also provides a registration function that allows uses to upload their current locations for user by proxy servers. SIP runs on top of several different transport protocols.

WO 2005/018200 A1 refers to setting up communication sessions. A method for setting up data sessions in a communication system is provided. The method comprises registering at least one user equipment with a service provider where after information about media capabilities is communicated between the at least one user equipment and the service provider and then stored. The method comprises further sending a request for a data session with at least one user equipment and using the stored information when setting up the requested data session. A communication system, an application server and a user equipment configured to operate accordingly are also provided.

### Disclosure of Invention

It is the object of the present invention to provide an improved method and apparatus for processing a call in a push to talk, PTT, system capable of preventing unnecessary session establishment with respect to a PTT client having a pre-established session.

This object is solved by the subject matter of the independent claims.

Preferred embodiments are defined by the dependent claims.

### Technical Solution

According to an aspect of the present invention, there is provided a method for processing a call in a PTT over cellular (PoC) network, including the steps of pre-establishing a session between a PoC client and a PoC server; receiving a call connection request message by the PoC server with the pre-established session; transmitting, by the PoC server, a query message to the PoC client to query if the PoC client accepts the call connection; and transmitting, by the PoC client, a response message to the PoC server in response to the query message.

According to another aspect of the present invention, there is provided a system for processing a call in a PTT over cellular (PoC) network, including a sending PoC system having a PoC server that transmits a PoC call connection request message; a receiving PoC server that receives the call connection request message from the sending PoC system and generates a query message to query if the call connection request is accepted; and a receiving PoC client that makes a pre-established session with the receiving PoC server, receives the query message from the receiving PoC server with the pre-established session, and transmits a response message to the query message to the receiving PoC server.

### Advantageous Effects

The present invention prevents a PTT system with a pre-established session to perform unnecessary processes. Accordingly, it is possible to reduce the number of session establishment processes and shorten a session establishment time through a pre-established session, and to reduce usage resources and time by virtue of the additional process reduction.

### Description of Drawings

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
FIG. 1 is a block diagram of a typical push to talk (PTT) system;
FIG. 2 is a block diagram of a PoC server that is one component of the PTT system shown in FIG. 1;
FIG. 3 illustrates a process of establishing a pre-established session in a PTT system;
FIG. 4 illustrates conventional call processing in manual answer mode in a PTT system with a pre-established session; and
FIG. 5 illustrates call processing in manual answer mode in a PTT system with a pre-established session according to the present invention.

### Mode for Invention

The present invention described below suggests a method for preventing performance of unnecessary procedures in which a query message is transmitted to a PTT terminal receiving a session establishment request in order to determine whether to accept a session request, and determination is made as to whether to establish a session based on a response message.

A PTT service network for providing a PTT service to subscribers will be described with reference to the accompanying drawings.

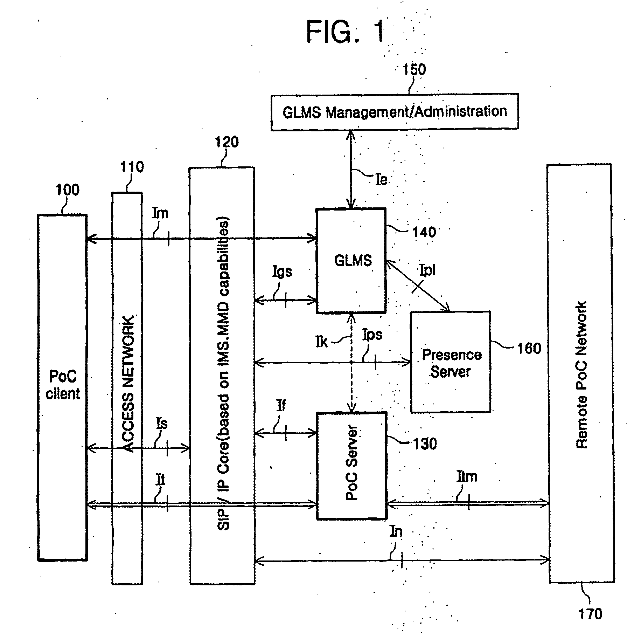

FIG. 1 is a diagram illustrating a configuration of a PTT service network. FIG. 1 specially shows a PTT over cellular (PoC) system that implements a PTT service based on a cellular network. Although the present invention will be described by way of example in connection with a PoC system of FIG. 1, it is intended to easily illustrate the present invention and the present invention may be applied to all PTT systems as well as the PoC system.

As shown in FIG. 1, the PoC system is composed of a PTT over cellular (PoC) client 100, an access network 110, a core session initiation protocol/Internet protocol (SIP/IP) core 120, a PoC server 130, a group and list management server (GLMS) 140, GLMS management/authentication unit 150, a presence server 160, and a remote PoC network 170.

The PoC client 100 is a PoC terminal for providing a PoC service to a PoC service subscriber and performs access to the PoC service. The PoC client 100 has as its primary functions initiating a PoC session, participating an existing session and terminating the session with respect to PoC service subscribers. In addition, the PoC client 100 may create and deliver a talk burst, support an instant personal alert, provide authentication upon accessing the PoC service, and the like. The PoC service subscriber uses the PoC client 100 to receive the PoC service. Accordingly, a mention of the PoC service subscriber will be omitted except when required. To receive the PoC service, the PoC client 100 is required to register its address in a serving-call service control function (S-CSCF; not shown) and a home subscriber server (HSS; not shown) constituting the SIP/IP core network, and acquire authentication.

The access network 110 refers to an access network on a conventional cellular network. Examples of the access network may include a base station transceiver system (BTS) and a base station controller (BSC) in the IS-95 and CDMA 2000 based systems. The PoC client 100 is allowed to access the IP based PoC network via the access network.

The SIP/IP core 120 performs message delivery, a registration of the PoC client 100 with the PoC service network, and the like. The SIP/IP core 120 is also termed a proxy. When the PoC client 100 completes address registration and authentication with respect to the S-CSCF and the HSS, the SIP/IP core 120 informs the PoC server 130 of all of the procedures to indicate that the PoC client 100 connects to the system. The SIP/IP core 120 parses the addresses of the respective PoC clients 100 while establishing the PoC session. That is, when the SIP/IP core 120 receives information about a group address from the PoC server 130, the SIP/IP core 120 recognizes where the PoC server 130 that is actually serving the PoC client 100 or an actual physical address of the PoC client 100, and establishes the SIP session.

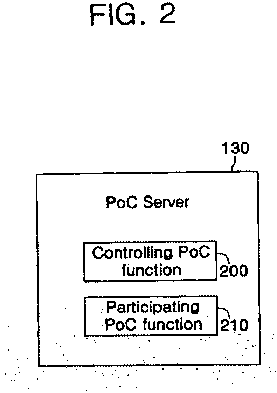

The PoC server 130 receives an SIP message from the SIP/IP core 120 and cooperates with the GLMS 140 to perform the call processing corresponding to the service. The PoC server 130 will be described below in detail with reference to FIG. 2.

The group and list management server (GLMS) 140 produces, modifies and deletes information about a group or its members to provide the PoC service. The PoC service subscriber may utilize its PoC client 100 to enter the information about the group or the members into the GLMS 140, or recognize information about PoC clients 100 that the PoC service subscriber can make a call, based on a received list of persons or groups from the GLMS 140. The PoC service subscriber can produce, modify and manage the group and the members in GLMS 140 via a communication network such as the Internet, an intranet, or the like, that a PoC service provider can trust, without utilizing the PoC client 100.

The GLMS management/authentication unit 150 supports the functions of the GLMS 140.

The presence server 160 stores current states of the respective PoC clients 100 (e.g., reachable, busy, Do-Not-Disturb, and the like), and provides state information of the PoC client 100, if necessary. That is, the presence server 160 stores state information about whether the PoC client 100 is on-line and about a position of the PoC client 100, registers/reserves a current position of the PoC client 100 in the on-line state, and provides the information to the PoC service subscribers that need the information so that a prompt communication service is enabled.

Similarly, the remote PoC network 170 includes the PoC client, access network, SIP/IP core, PoC server, GLMS server, GLMS management/authentication unit, presence server from the PoC client 100 to the presence server 160 as described above.

The components of the PoC system may be connected to one another via Is, If, In, Im, Ik, Ipl, Ips, Ie, It and Itn interfaces, as shown in FIG. 1. 'Is' is an interface used to perform session signaling between the PoC client 100 and the SIP/IP core 120. 'If' is an interface used to perform session signaling between the SIP/IP core 120 and the PoC server 130. 'In' is an interface used to perform session signaling between a sending SIP/IP core and a receiving SIP/IP core. 'Im' is an interface used to manage a group for PoC clients. 'Ik' is an interface used to manage a group for the PoC server 130. 'Ipl' and 'Ips' are interfaces used to provide access information about the PoC client 100 to the GLMS 140 and the SIP/IP core 120. Ie is an interface used to connect between the GLMS management/authentication unit 150 and the GLMS. Finally, 'It' and 'Itn' are interfaces used for floor control and media processing.

Among these interfaces, a session is established via the Is, If and In interfaces to provide the PoC service. PoC service data transmission and PoC service control are performed via a session established by the It and Itn interfaces. The PoC service session is established using a session initiation protocol (SIP). The SIP is a protocol used for signaling that is related to a call setup, a call release and other additional services. The SIP is text based application level protocol and has been recently employed in a number of systems because of its simple structure and excellent extensibility compared to the conventional protocols. The SIP is a signal protocol used to establish the session. The SIP can be used to provide for video conference, multimedia, on-line game connection and the like, as well as Internet telephony. Request for Comment (RFC) 2543 and its subsequent versions have been adopted as a standard RFC and are now updated into RFC 3261. Messages described herein will be presumed to be SIP messages unless mentioned separately.

FIG. 2 is a functional block diagram of the PoC server. As shown in FIG. 2, the PoC server 130 may include a controlling PoC function 200 and a participating PoC function 210. The controlling PoC function 200 serves to manage the PoC session. The controlling PoC function 200 receives a request for rights of PoC clients 100 to talk (hereinafter, referred to as 'floors'), orders the floors of the respective PoC clients 100, and provides the floors. Further, the controlling PoC function 200 serves to distribute a talk of one client to all other clients that participate in the group call. Further, the controlling PoC function 200 provides information about the PoC clients 100 that participate in the group call.

The participating PoC function 210 manages sessions associated with the respective PoC clients 100. The participating PoC function 210 relays between the PoC client 100 and the controlling PoC function 200 when the PoC client 100 requests the controlling PoC function 200 to provide a floor or the controlling PoC function 200 provides the floor to the PoC client 100. Further, the participating PoC function 210 relays media between the controlling PoC function 200 and the PoC client 100, and when they use a different CODEC, performs a transcoding operation. Further, when one talk is in session and another talk occurs in and session, the participating PoC function 210 filters one of the talks depending on a selection by the PoC client 100. The PoC client 100 may connect to a plurality of different controlling PoC functions 200 through the single participating PoC function 210.

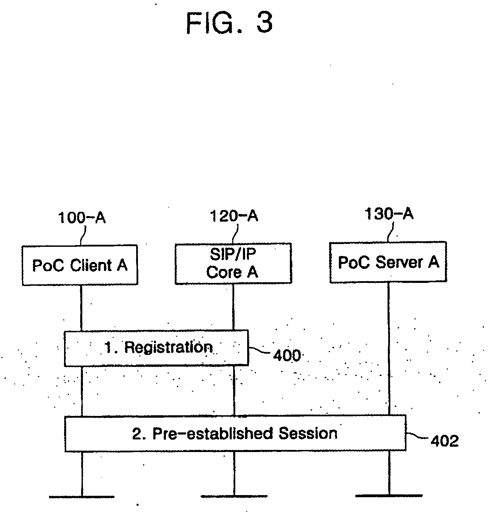

The present invention is applied to a PoC system with the pre-established session as shown in FIG. 4. FIG. 3 shows a process of establishing a pre-established session in a PTT system. As shown in FIG. 3, a pre-established session establishment process 402 may be performed when a process 400 of registering and authenticating the PoC client A 100-A with the SIP/IP core A 120-A is completed. Upon performing the reestablished session establishment process 402, a mechanism for negotiating media parameters such as Internet protocol (IP) addresses, ports and CODECs used to transmit media and a talk burst control message is performed between the PoC client A 100-A and the home PoC server A 130-A. The use of the pre-established session eliminates a re-negotiation process between the PoC client A 100-A and the PoC server A 130-A upon the PoC call request.

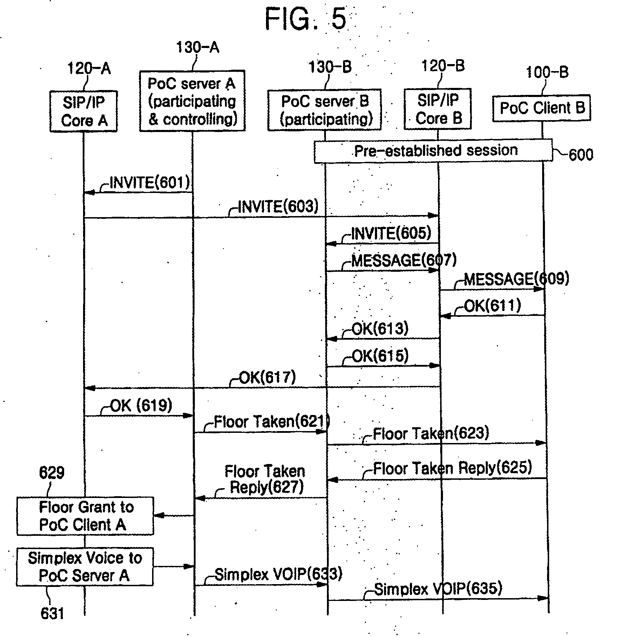

The method according to the present invention will be now described with reference to FIG. 5, in which the PoC system with the pre-established session is allowed to determine if a PoC client receiving a session establishment request accepts the requested PoC call.

FIG. 5 illustrates call processing in manual answer mode in a PoC system with a pre-established session according to the present invention. As shown in FIG. 5, the PoC system with the pre-established session 600 transmits an INVITE message to the PoC server B 130-B in response to a PoC call request by the PoC client A 100-A (601, 603 and 605).

The PoC server B 130-B, which receives the INVITE message responsive to the PoC call request, transmits a query message 'MESSAGE' 607-609 to query whether the call is accepted, to the PoC client B 100-B. This query message is transmitted to the PoC client B 100-B through a transmission process from the PoC server 130-B to the SIP/IP core B 120-B (607) and a transmission process from the SIP/IP core B 120-B to the PoC client B 100-B (609). The query messages 607 and 609 contain information that indicates the PoC client 100 (i.e. PoC client A 100-A and PoC client B 100-B) requesting the PoC call. The PoC server B 130-B performs its check using the query messages 607 and 609 to determine if the PoC client B 100-B accepts the PoC call.

When the PoC client B 100-B, which receives the query message, desires to accept the PoC call, the PoC client B 100-B transmits an OK message to the PoC server B 130-B PoC that includes information notifying that the call is accepted (611 and 613). The OK message may include both information indicating that the query message is received and information indicating that the PoC call is accepted.

Upon receipt of the OK message responsive to the query message from the PoC client B 100-B, the server B 130-B transmits the received OK message from the PoC server A 130-A responsive to the INVITE message to the PoC server A 130-A (615, 617, 619). That is, the query message acts as a trigger event of the response signal to the INVITE message. The OK message transmission from the PoC server B 130-B to the PoC server A 130-A is also performed via the SIP/IP cores 120. The subsequent call establishment processes 621 to 635 are the same as the processes 515 to 529 shown in FIG. 4. A description of subsequent call setup related processes will be omitted.

When the PoC client B 100-B wants to not accept the PoC call, the PoC client B 100-B transmits an OK message to the PoC server B 130-B that contains information indicating that the PoC call is not accepted (611). Examples of the OK message may include No. 406: Not Acceptable and No. 486: Busy Here of an SIP response message, and the like. The PoC server B 130-B, which receives this response message from the PoC client B 100-B, transmits a response message indicating Not Acceptable or Busy to the PoC server A 130-A, which acts as the controlling PoC function 200 (615). In this case, the PoC call ends without generating a media connection.

According to the present invention, only when the PoC client B 100-B receiving the PoC call request accepts the PoC call, session establishment and media connection generation are made, preventing wastes of resources by unnecessary session establishment and media connection generation, and wastes of a time due to performance of these procedures.

As described above, the embodiments using the PoC system are only intended to assist in understanding the present invention, and the present invention may be applied to all PTT systems, as well as the PoC system.

While the present invention has been described with reference to exemplary embodiments thereof, it will be understood by those skilled in the art that various changes in form and detail may be made therein without departing from the scope of the present invention as defined by the following claims.

## Claims

1. A method for processing a call by a push to talk, PTT, over cellular, PoC, server in a PoC network, the method comprising the steps of:
pre-establishing a session (600) between a PoC client (100-B) and a PoC server (130-B) for storing in advance information required for a subsequent PoC call connection establishment;
receiving a PoC call connection request message (601-605) by the PoC server (130-B) participating in the pre-established session (600) between the PoC client (100-B) and the PoC server (130-B);
the method being **characterized by** the steps of:
transmitting, by the PoC server (130-B), a query message (607-609) to the PoC client (100-B) to determine if the PoC client (100-B) accepts the PoC call connection; and
receiving, by the PoC server (130-B), a response message (611-613) from the PoC client (100-B) in response to the query message (607-609),
wherein only when the PoC client (100-B) receiving the query message accepts the PoC call, performing the PoC call connection and a media connection generation.

2. The method according to claim 1, wherein the query message (607-609) includes information related to a remote client (100-A) requesting the PoC call connection.

3. The method according to claim 2, further comprising a step of establishing the PoC call connection between the remote client (100-A) requesting the PoC call connection and the PoC client (100-B) participating in the pre-established session, when the response message indicates that the PoC call connection request is accepted.

4. The method according to claim 2, wherein when the PoC client (100-B), participating in the pre-established session, refuses to accept the PoC call connection request, the response message includes information that the PoC call is not accepted.

5. The method according to claim 1, wherein the PoC call connection request message (601-605), the query message (607-609) and the response message (611-613) are session initiation protocol, SIP, messages.

6. A system for processing a call in a push to talk, PTT, over cellular, PoC, network, the system comprising:
a receiving PoC server (130-B);
a receiving PoC client (100-B); and
a sending PoC system,
wherein the receiving PoC server (130-B) and the receiving PoC client (100-8) are adapted to pre-establish a session between themselves for storing in advance information required for a subsequent PoC call connection establishment,
wherein the sending PoC system has a PoC server (130-A) adapted to transmit a PoC call connection request message,
wherein the receiving PoC server (130-B) is adapted to receive the PoC call connection request message from the sending PoC system and to generate a query message and to send the query message to the receiving PoC client (100-B) to determine if the PoC call connection request is accepted,
wherein the receiving PoC client (100-B) is adapted to receive the query message from the receiving PoC server (130-B) and to transmit a response message to the receiving PoC server (130-B) in response to the query message, and
wherein the system is adapted to perform the PoC call connection and a media connection generation only when the receiving PoC client (100-B) accepts the PoC call.

7. The system according to claim 6, wherein the PoC call connection request message and the query message includes information related to a remote client (100-A) requesting the PoC call connection.

8. The system according to claim 7, wherein the PoC call connection request message, the query message and the response message are SIP messages.

9. A method for processing a call by a push to talk, PTT, over cellular, PoC, client (100-B) for performing a call connection on a PoC network, the method comprising:
pre-establishing a session between the PoC client (100-B) and a receiving PoC server
(130-B) for storing in advance information required for a subsequent PoC call connection establishment;
the method being **characterized by** the steps of:
receiving, by the PoC client (100-B), a query message (607-609) related to a PoC call connection request message from the receiving PoC server (130-B), and
transmitting a response message (611-613) indicating whether to accept the PoC call connection,
wherein only when the PoC client (100-B) receiving the query message accepts the PoC call, performing the PoC call connection and a media connection generation.

10. The method of claim 9, wherein the PoC call connection request message (601-605) and the query message (607-609) include information about a remote client (100-A) requesting the PoC call connection.

11. A push to talk, PTT, over cellular, PoC, client (100-B) adapted to operate according to claims 9 or 10.

12. A push to talk, PTT, over cellular, PoC, server (130-B) adapted to operate according to one of claims 1 to 5.

## Patentansprüche

1. Verfahren zum Verarbeiten eines Anrufs durch einen Push-To-Talk (PTT) over Cellular (PoC)-Server in einem PoC-Netzwerk, wobei das Verfahren die folgenden Schritte umfasst:
vorausgehendes Herstellen einer Sitzung (600) zwischen einem PoC-Client (100-B) und einem PoC-Server (130-B) für das vorausgehende Speichern von Informationen, die für eine folgende PoC-Anrufverbindungsherstellung erforderlich sind,
Empfangen einer PoC-Anrufverbindungs-Anfragenachricht (601-605) durch den PoC-Server (130-B), der an der vorausgehend hergestellten Sitzung (600) zwischen dem PoC-Client (100-B) und dem PoC-Server (130-B) teilnimmt,
wobei das Verfahren durch die folgenden Schritte gekennzeichnet ist:
Senden, durch den PoC-Server (130-B) einer Rückfragenachricht (607-609) an den PoC-Client (100-B), um zu bestimmen, ob der PoC-Client (100-B) die PoC-Anrufverbindung annimmt, und
Empfangen, durch den PoC-Server (130-B), einer Antwortnachricht (611-613) von dem PoC-Client (100-B) in Antwort auf die Rückfragenachricht (607-609), und
nur wenn der die Rückfragenachricht empfangende PoC-Client (100-B) den PoC-Anruf annimmt, Durchführen der PoC-Anrufverbindung und einer Medienverbindungserzeugung.

2. Verfahren nach Anspruch 1, wobei die Rückfragenachricht (607-609) Informationen enthält, die auf einen die PoC-Anrufverbindung anfragenden Remote-Client (100-A) bezogen sind.

3. Verfahren nach Anspruch 2, das weiterhin einen Schritt zum Herstellen der PoC-Anrufverbindung zwischen dem Remote-Client (100-A), der die PoC-Anrufverbindung anfragt, und dem PoC-Client (100-B), der an der vorausgehend hergestellten Sitzung teilnimmt, wenn die Antwortnachricht angibt, dass die PoC-Anrufverbindungsanfrage angenommen wird, umfasst.

4. Verfahren nach Anspruch 2, wobei, wenn der PoC-Client (100-B), der an der vorausgehend hergestellten Sitzung teilnimmt, eine Annahme der PoC-Anrufverbindungsanfrage ablehnt, die Antwortnachricht Informationen dazu, dass der PoC-Anruf nicht angenommen wird, enthält.

5. Verfahren nach Anspruch 1, wobei die PoC-Anrufverbindungs-Anfragenachricht (601-605), die Rückfragenachricht (607-609) und die Antwortnachricht (611-613) Session Initiation Protocol (SIP)-Nachrichten sind.

6. System zum Verarbeiten eines Anrufs in einem Push-To-Talk (PTT) over Cellular (PoC)-Netzwerk, wobei das System umfasst:
einen empfangenden PoC-Server (130-B),
einen empfangenen PoC-Client (100-B), und
ein sendendes PoC-System,
wobei der empfangende PoC-Server (130-B) und der empfangende PoC-Client (100-B) ausgebildet sind, um vorausgehend eine Sitzung zwischen ihnen für das vorausgehende Speichern von Informationen, die für eine folgende PoC-Anrufverbindungsherstellung erforderlich sind, herzustellen,
wobei das sendende PoC-System einen PoC-Server (130-A) aufweist, der ausgebildet ist, um eine PoC-Anrufverbindungs-Anfragenachricht zu senden,
wobei der empfangende PoC-Server (130-B) ausgebildet ist, um die PoC-Anrufverbindungs-Anfragenachricht von dem sendenden PoC-System zu empfangen, eine Rückfragenachricht zu erzeugen und die Rückfragenachricht an den empfangenden PoC-Client (100-B) zu senden, um zu bestimmen, ob die PoC-Anrufverbindungsanfrage angenommen wird,
wobei der empfangende PoC-Client (100-B) ausgebildet ist, um die Rückfragenachricht von dem empfangenden PoC-Server (130-B) zu empfangen und eine Antwortnachricht an den empfangenden PoC-Server (130-B) in Antwort auf die Rückfragenachricht zu senden, und
wobei das System ausgebildet ist, um die PoC-Anrufverbindung und eine Medienverbindungserzeugung nur dann durchzuführen, wenn der empfangende PoC-Client (100-B) den PoC-Anruf annimmt.

7. System nach Anspruch 6, wobei die PoC-Anrufverbindungs-Anfragenachricht und die Rückfragenachricht Informationen enthalten, die auf einen die PoC-Anrufverbindung anfragenden Remote-Client (100-A) bezogen sind.

8. System nach Anspruch 7, wobei die PoC-Anrufverbindungs-Anfragenachricht, die Rückfragenachricht und die Antwortnachricht Session Initiation Protocol (SIP)-Nachrichten sind.

9. Verfahren zum Verarbeiten eines Anrufs durch einen Push-To-Talk (PTT) over Cellular (PoC)-Client (100-B) für das Durchführen einer Anrufverbindung in einem PoC-Netzwerk, wobei das Verfahren umfasst:
vorausgehendes Herstellen einer Sitzung zwischen dem PoC-Client (100-B) und einem empfangenden PoC-Server (130-B) für das vorausgehende Speichern von Informationen, die für eine folgende PoC-Anrufverbindungsherstellung erforderlich sind,
wobei das Verfahren durch die folgenden Schritte gekennzeichnet ist:
Empfangen, durch den PoC-Client (100-B), einer Rückfragenachricht (607-609), die auf eine PoC-Anrufverbindungs-Anfragenachricht von dem empfangenen PoC-Server (130-B) bezogen ist, und
Senden einer Antwortnachricht (611-613), die angibt, ob die PoC-Anrufverbindung angenommen werden soll,
nur wenn der die Rückfragenachricht empfangende PoC-Client (100-B) den PoC-Anruf annimmt, Durchführen der PoC-Anrufverbindung und einer Medienverbindungserzeugung.

10. Verfahren nach Anspruch 9, wobei die PoC-Anrufverbindungs-Anfragenachricht (601-605), und die Rückfragenachricht (607-609) Informationen zu einem die PoC-Anrufverbindung anfragenden Remote-Client (100-A) enthalten.

11. Push-To-Talk (PTT) over Cellular (PoC)-Client (100-B), der für einen Betrieb gemäß den Ansprüchen 9 oder 10 ausgebildet ist.

12. Push-To-Talk (PTT) over Cellular (PoC)-Server (130-B), der für einen Betrieb gemäß einem der Ansprüche 1 bis 5 ausgebildet ist.

## Revendications

1. Procédé de traitement d'un appel par un serveur de messagerie vocale instantanée, PoC, dans un réseau de PoC, le procédé comprenant les étapes consistant à :
établir à l'avance une session (600) entre un client de PoC (100-B) et un serveur de PoC (130-B) pour mémoriser à l'avance les informations nécessaires pour l'établissement ultérieur d'une connexion d'appel de PoC ;
recevoir un message de demande de connexion d'appel de PoC (601 à 605) par le serveur de PoC (130-B) participant à la session établie à l'avance (600) entre le client de PoC (100-B) et le serveur de PoC (130-B) ;
le procédé étant **caractérisé par** les étapes consistant à :
transmettre, par le serveur de PoC (130-B) un message d'interrogation (607 à 609) au client de PoC (100-B) pour déterminer si le client de PoC (100-B) accepte la connexion d'appel de PoC ; et
recevoir, par le serveur de PoC (130-B), un message de réponse (611 à 613) du client de PoC (100-B) en réponse au message d'interrogation (607 à 609),
dans lequel seulement lorsque le client de PoC (100-B) recevant le message d'interrogation accepte l'appel de PoC, effectuer la connexion d'appel de PoC et la génération d'une connexion de support.

2. Procédé selon la revendication 1, dans lequel le message d'interrogation (607 à 609) comporte des informations concernant un client distant (100-A) demandant la connexion d'appel de PoC.

3. Procédé selon la revendication 2, comprenant en outre une étape consistant à établir la connexion d'appel de PoC entre le client distant (100-A) demandant la connexion d'appel de PoC et le client de PoC (100-B) participant à la session établie à l'avance, lorsque le message de réponse indique que la demande de connexion d'appel de PoC est acceptée.

4. Procédé selon la revendication 2, dans lequel, lorsque le client de PoC (100-B) participant à la session établie à l'avance refuse d'accepter la demande de connexion d'appel de PoC, le message de réponse comporte l'information du fait que l'appel de PoC n'est pas accepté.

5. Procédé selon la revendication 1, dans lequel le message de demande de connexion d'appel de PoC (601 à 605), le message d'interrogation (607 à 609) et le message de réponse (611 à 613), sont des messages de protocole d'ouverture de session, SIP.

6. Système de traitement d'un appel dans un réseau de PoC, le système comprenant :
un serveur de PoC récepteur (130-B) ;
un client de PoC récepteur (100-B) ; et
un système de PoC émetteur,
dans lequel le serveur de PoC récepteur (130-B) et le client de PoC récepteur (100-B) sont adaptés à établir à l'avance une session entre eux-mêmes pour mémoriser à l'avance les informations nécessaires pour l'établissement ultérieur d'une connexion d'appel de PoC ;
dans lequel le système de PoC émetteur comporte un serveur de PoC (130-A) adapté à transmettre un message de demande de connexion d'appel de PoC ;
dans lequel le serveur de PoC récepteur (130-B) est adapté à recevoir le message de demande de connexion d'appel de PoC depuis le système de PoC émetteur et à générer un message d'interrogation et à envoyer le message d'interrogation au client de PoC récepteur (100-B) pour déterminer si la demande de connexion d'appel de PoC est acceptée,
dans lequel le client de PoC récepteur (100-B) est adapté à recevoir le message d'interrogation depuis le serveur de PoC récepteur (130-B) et à transmettre un message de réponse au serveur de PoC récepteur (130-B) en réponse au message d'interrogation, et
dans lequel le système est adapté à effectuer la connexion d'appel de PoC et une génération de connexion de support seulement lorsque le client de PoC récepteur (100-B) accepte l'appel de PoC.

7. Système selon la revendication 6, dans lequel le message de demande de connexion d'appel de PoC et le message d'interrogation comportent des informations concernant un client distant (100-A) demandant la connexion d'appel de PoC.

8. Système selon la revendication 7, dans lequel le message de demande de connexion d'appel de PoC, le message d'interrogation et le message de réponse, sont des messages de SIP.

9. Procédé de traitement d'un appel par un client (100-B) de messagerie vocale instantanée, PoC, pour effectuer une connexion d'appel sur un réseau de PoC, le procédé comprenant :
l'établissement à l'avance d'une session entre le client de PoC (100-B) et un serveur de PoC récepteur (130-B) pour mémoriser à l'avance les informations nécessaires pour l'établissement ultérieur d'une connexion d'appel de PoC ;
le procédé étant **caractérisé par** les étapes consistant à :
recevoir, par le client de PoC (130-B), un message d'interrogation (607 à 609) concernant un message de demande de connexion d'appel de PoC depuis le serveur de PoC récepteur (130-B), et
transmettre un message de réponse (611 à 613) indiquant si la connexion d'appel de PoC est acceptée,
dans lequel seulement lorsque le client de PoC (100-B) recevant le message d'interrogation accepte l'appel de PoC, effectuer la connexion d'appel de PoC et la génération d'une connexion de support.

10. Procédé selon la revendication 9, dans lequel le message de demande de connexion d'appel de PoC (601 à 605) et le message d'interrogation (607 à 609) comportent des informations concernant un client distant (100-A) demandant la connexion d'appel de PoC.

11. Client de messagerie instantanée, PoC, (100-B) adapté à fonctionner selon les revendications 9 ou 10.

12. Serveur de messagerie instantanée, PoC, (130-B) adapté à fonctionner selon l'une des revendications 1 à 5.
